# EUROPÄISCHE PATENTSCHRIFT

(11) **EP 0 624 776 B1**
(45) Veröffentlichungstag und Bekanntmachung des Hinweises auf die Patenterteilung: **06.08.1997**
(21) Anmeldenummer: 93107841.4
(22) Anmeldetag: 13.05.1993
(51) Int. Cl.: G01B 21/30, B60G 17/015

(54) **Verfahren zur Erkennung von Schlechtwegstrecken mit Hilfe eines Tankdrucksensors**
Procedure for detecting rough road sections using a fuel tank pressure sensor
Procédé de détection d'une mauvaise route à l'aide d'un capteur de pression du carburant

(43) Veröffentlichungstag der Anmeldung: 17.11.1994
(73) Patentinhaber: SIEMENS AKTIENGESELLSCHAFT, 80333 München (DE)
(72) Erfinder: Pfleger, Hartmut, Dipl.-Ing., D-8400 Regensburg (DE); Wier, Manfred, Dr. Ing., D-8411 Wenzenbach (DE); Engl, Maximilian, Dipl.-Ing., D-8400 Regensburg (DE); Angermaier, Anton, Dipl.-Ing., D-8300 Landshut (DE)

(56) Entgegenhaltungen:
- DE-A- 3 434 757

## Beschreibung

Die Erfindung betrifft ein Verfahren zur Erkennung von Schlechtwegstrecken unter Auswertung der Signale eines Sensors, der den Druck im Kraftstofftank mißt.

Eine Erkennung von Schlechtwegstrecken ist beispielsweise notwendig bei Verfahren, die die Laufunruhe einer Brennkraftmaschine auswerten, um Verbrennungsaussetzer festzustellen. Eine Schlechtwegstrecke täuscht durch die Rückwirkungen auf die Kurbelwelle bei diesen Verfahren fälschlicherweise Verbrennungsaussetzer vor. Solche Verfahren zur Erkennung von Verbrennungsaussetzern müssen daher bei Schlechtwegstrecken ausgeblendet werden.

Für die Erkennung von Schlechtwegstrecken sind Verfahren bekannt, die Signale auswerten, die von Beschleunigungssensoren geliefert werden, die an den Achsen oder der Karosserie angebracht sind. Solche Beschleunigungssensoren sind aber recht teuer.
Andere Verfahren werten Raddrehzahlen aus. Die dafür notwendigen Raddrehzahlsensoren sind aber üblicherweise nur bei Fahrzeugen vorhanden, die ein Antiblockiersystem besitzen.

Aus der DE 34 34 757 A1 ist ein Fahrwerk für Radfahrzeuge mit einer Vorrichtung zur Kompensation von Fahrbahnunebenheiten unter Verwendung eines elektronisch gesteuerten Stellgliedes, das zwischen dem Fahrzeugchassis und jeder einzelnen Radachse angeordnet ist, bekannt. Eine durch Fahrbahnunebenheiten hervorgerufene Druckänderung in den Reifen der Fahrzeugräder wird mittels eines Sensors erfaßt und als Kriterium für eine Nachführung des Fahrwerks ausgewertet, derart, daß eine vorgegebene Sollhöhe des Fahrzeugchassis, bezogen auf eine ebene Fahrbahn, beibehalten wird.

Aufgabe der vorliegenden Erfindung ist es, ein weiteres Verfahren anzugeben, mit dem Schlechtwegstrecken erkannt werden können.

Gelöst wird dies mit einem Verfahren, wie es im Anspruch 1 definiert ist. Es wird dabei das Signal ausgewertet, das ein Sensor über den Tankdruck ausgibt. Dieser Sensor ist bei neueren Motorsteuerungssystemen zur Überwachung des Tanksystems sowieso vorhanden.

Durch eine Schlechtwegstrecke finden Verformungen des Tanks statt, d.h. es tritt eine Volumenänderung und damit auch eine Druckänderung im Tank auf. Die Druckänderungen, die durch die Schlechtwegstrecke auftreten, haben eine größere Amplitude und höhere Frequenz als die Druckänderungen, wie sie im normalen Fahrbetrieb, beispielsweise bei Kurvenfahrt auftreten.

Beim erfindungsgemäßen Verfahren wird daher der Tankdruckwert, der zyklisch durch einen Tankdrucksensor abgetastet wird, in wählbaren Zeitintervallen ausgewertet.
Die Auswerterate wird durch Versuche ermittelt, da sie abhängt vom mechanischen Aufbau des Tanks. Sie kann außerdem noch abhängig von der Fahrzeuggeschwindigkeit und dem Füllstand des Tanks gewählt werden.

Für die Schlechtwegstreckenauswertung ist die interessierende Größe die zeitliche Änderung des Tankdrucks.

Dazu sind verschiedene Berechnungsverfahren möglich.

Beispielsweise kann aus aufeinanderfolgenden Abtastwerten jeweils die Differenz gebildet werden, d.h. es werden die zeitlichen Veränderungen des Tankdrucks festgestellt.
Die Beträge der ermittelten Differenzen können anschließend noch einer Mittelung beispielsweise einer gleitenden Mittelung unterzogen werden.

Überschreiten die so ermittelten Änderungswerte des Tankdrucks einen vorgebbaren Grenzwert, wird auf eine Schlechtwegstrecke geschlossen und beispielsweise die Verbrennungsaussetzererkennung ausgeblendet. Die Ausblendung kann für ein festes Zeitintervall erfolgen oder so lange, bis die Änderungswerte den Grenzwert wieder unterschreiten.
Die Grenzwerte werden durch Versuche in Abhängigkeit von der Fahrzeuggeschwindigkeit, dem Tankfüllstand oder anderer Betriebsgrößen der Brennkraftmaschine ermittelt und beispielsweise in einem Kennfeld abgespeichert.
Auch die Mittelungskonstante kann betriebsgrößenabhängig und abhängig von der Auswerterate in einem Kennfeld abgespeichert sein.

Ein anderes mögliches Auswerteverfahren besteht beispielsweise darin, die Beträge der Änderungen des Tankdrucks über ein vorgebbares Zeitintervall aufzusummieren und erst die Summe dann mit einem Grenzwert zu vergleichen.

Vorliegendes Verfahren zur Erkennung von Schlechtwegstrecken mittels eines Tankdrucksensors kann natürlich auch kombiniert werden mit anderen bekannten Verfahren zur Schlechtwegstreckenerkennung. Das Vorliegen einer Schlechtwegstrecke wird in diesem Fall nur dann angezeigt, wenn eines oder mehrere dieser Verfahren mit einer vorgebbaren Zuverlässigkeit eine Schlechtwegstrecke anzeigen.

Die Erfindung wird im folgenden anhand der Zeichnungsfigur noch näher erläutert.

Die Zeichnungsfigur zeigt schematisch den Ablauf des erfindungsgemäßen Verfahrens, wobei zur Auswertung beispielhaft hier der oben angeführte Vergleich von aufeinanderfolgenden Abtastwerten zur Anwendung kommt.

Im Verfahrensschritt S1 wird der vom Sensor gelieferte Wert des Tankdrucks TDₙ festgestellt und zwischengespeichert.

Im Verfahrensschritt S2 wird der Betrag der Differenz zwischen den zwei zuletzt gemessenen aufeinanderfolgenden Tankdruckwerten gebildet (DTD).

Dieser Differenzbetrag DTD wird im Verfahrensschritt S3 einer Mittelung unterzogen, beispielsweise einer gleitenden Mittelung (MDTD).

Im Verfahrensschritt S4 wird dieser gemittelte Differenzwert MDTD mit einem Grenzwert GW verglichen. Dieser Grenzwert wird beispielsweise abhängig von der aktuellen Fahrzeuggeschwindigkeit und dem aktuellen Füllstand des Tanks einem Kennfeld entnommen.

Ist der Differenzwert MDTD größer dem Grenzwert GW wird im Verfahrensschritt S5 eine Schlechtwegstrecke angezeigt und im Verfahrensschritt S6 die Verbrennungsaussetzererkennung ausgeblendet.

Ist der Differenzwert MDTD aber kleiner oder gleich dem Grenzwert, so liegt keine Schlechtwegstrecke vor, die Aussetzererkennung wird nicht ausgeblendet, beziehungsweise sie wird wieder eingeblendet, wenn sie vorher ausgeblendet war.

In beiden Fällen wird dann wieder zum Verfahrensanfang A zurückgegangen.

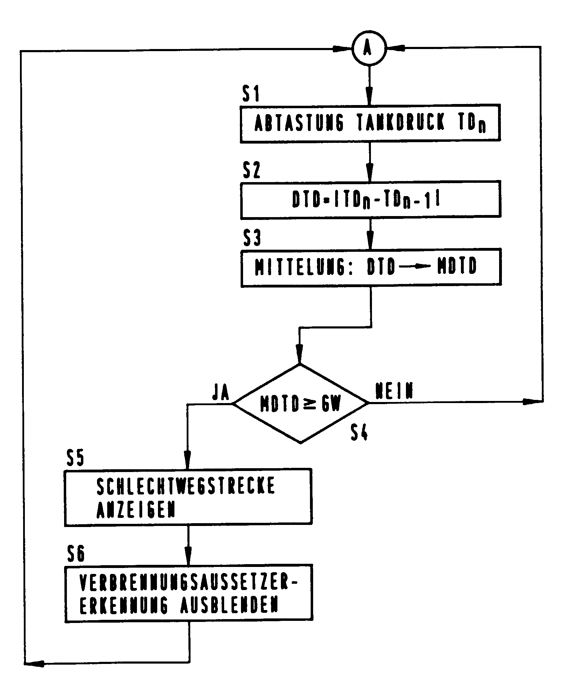

## Patentansprüche

1. Verfahren zur Erkennung von Schlechtwegstrecken für ein, durch eine Brennkraftmaschine angetriebenes Kraftfahrzeug
- mit einem zum vorübergehenden Speichern von Kraftstoff dienenden Kraftstofftank und
- einem zum Erfassen von Tankdruckwerten des Kraftstofftanks dienenden Drucksensor
**dadurch gekennzeichnet,**
- daß zu aufeinanderfolgenden Auswertezeitpunkten (n, n-1) die Tankdruckwerte (TDₙ) erfaßt werden,
- aus aufeinanderfolgenden Tankdruckwerten (TDₙ, TDₙ₋₁) die Änderung des Tankdrucks (DTD) ermittelt wird,
- die Änderung des Tankdrucks (DTD) mit einem vorgegebenen Grenzwert (GW) verglichen wird und
- bei Überschreiten dieses Grenzwertes (GW) eine Schlechtwegstrecke erkannt wird.

2. Verfahren nach Anspruch 1
**dadurch gekennzeichnet,**
daß die Änderung des Tankdrucks (DTD) vor dem Vergleich mit dem Grenzwert (GW) einer Mittelung (MDTD) mit einer wählbaren Mittelungskonstanten unterzogen wird.

3. Verfahren nach Anspruch 1
**dadurch gekennzeichnet,**
daß die Beträge der Änderung des Tankdrucks (DTD) gebildet werden, diese über ein vorgebbares Zeitintervall aufsummiert werden und erst diese Summe mit einem vorgebbaren Grenzwert verglichen wird.

4. Verfahren nach Anspruch 1
**dadurch gekennzeichnet,**
daß der Grenzwert (GW) abhängig von den aktuellen Betriebsgrößen des Kraftfahrzeugs, insbesondere der Fahrzeuggeschwindigkeit und dem Füllstand des Kraftstofftanks einem Kennfeld entnommen wird.

5. Verfahren nach Anspruch 1
**dadurch gekennzeichnet,**
daß die Auswerterate für die Auswertung des Tankdrucks (DTD) abhängig von den aktuellen Betriebsgrößen des Kraftfahrzeugs, insbesondere der Fahrzeuggeschwindigkeit und dem aktuellen Füllstand des Kraftstofftanks einem Kennfeld entnommen wird.

6. Verfahren nach Anspruch 2
**dadurch gekennzeichnet,**
daß die verwendete Mittelungskonstante abhängig von der Auswerterate des Tankdrucks (DTD) und den aktuellen Betriebsgrößen des Kraftfahrzeugs, insbesondere der Fahrzeuggeschwindigkeit und dem Füllstand des Kraftstofftanks einem Kennfeld entnommen wird.

7. Verfahren nach Anspruch 1
**dadurch gekennzeichnet,**
daß ein Verfahren zur Erkennung von Verbrennungsaussetzern der Brennkraftmaschine ausgeblendet wird, wenn eine Schlechtwegstrecke erkannt wird.

8. Verfahren nach Anspruch 7
**dadurch gekennzeichnet,**
daß die Ausblendung für eine vorgebbare Zeitdauer erfolgt.

9. Verfahren nach Anspruch 7
**dadurch gekennzeichnet,**
daß die Ausblendung solange erfolgt, wie der Differenzwert (DTD) oberhalb des Grenzwertes (GW) liegt.

10. Verfahren nach Anspruch 7
**dadurch gekennzeichnet,**
daß die Ausblendung des Verbrennungsaussetzererkennungsverfahrens nur erfolgt, wenn noch zusätzlich parallel durchgeführte andere Verfahren zur Schlechtwegstreckenerkennung mit einer vorgebbaren Zuverlässigkeit auf eine Schlechtwegstrecke schließen lassen.

## Claims

1. Procedure for detecting stretches of rough road for a motor vehicle driven by an internal combustion engine
- having a fuel tank which serves to store fuel temporarily and
- a pressure sensor which serves to detect fuel tank pressure values
characterized
- in that the fuel tank pressure values (TDₙ) are detected at successive evaluation times (n, n-1),
- the change in the fuel tank pressure (DTD) is determined from successive fuel tank pressure values (TDₙ, TDₙ₋₁),
- the change in the fuel tank pressure (DTD) is compared with a prescribed limit value (GW) and
- a stretch of rough road is detected when this limit value (GW) is exceeded.

2. Procedure according to Claim 1 characterized in that, before the comparison with the limit value (GW), the change in the fuel tank pressure (DTD) is subjected to averaging (MDTD) with a selectable averaging constant.

3. Procedure according to Claim 1, characterized in that the absolute values of the change in the fuel tank pressure (DTD) are formed, the latter are added together over a prescribable time interval and it is only this sum which is compared with a prescribable limit value.

4. Procedure according to Claim 1, characterized in that the limit value (GW) is obtained from a characteristic diagram as a function of the operating variables of the motor vehicle at a given time, in particular the vehicle speed and the filling level of the fuel tank.

5. Procedure according to Claim 1, characterized in that the evaluation rate for the evaluation of the fuel tank pressure (DTD) is obtained from a characteristic diagram as a function of the operating variables of the motor vehicle at a given time, in particular the vehicle speed and the filling level of the fuel tank at a given time.

6. Procedure according to Claim 2, characterized in that the averaging constant used is obtained from a characteristic diagram as a function of the evaluation rate of the fuel tank pressure (DTD) and the operating variables of the motor vehicle at a given time, in particular the vehicle speed and the filling level of the fuel tank.

7. Procedure according to Claim 1, characterized in that a procedure for detecting combustion misfires of the internal combustion engine is blanked out if a stretch of rough road is detected.

8. Procedure according to Claim 7, characterized in that the blanking out takes place for a prescribable time period.

9. Procedure according to Claim 7, characterized in that the blanking out takes place for as long as the differential value (DTD) is above the limit value (GW).

10. Procedure according to Claim 7, characterized in that the blanking out of the combustion misfire detection procedure takes place only if other procedures, carried out additionally in parallel, for detecting stretches of rough road indicate a stretch of rough road with a prescribable reliability.

## Revendications

1. Procédé pour reconnaître des sections de voies de circulation en mauvais état, destiné à un véhicule automobile entraîné par un moteur à combustion interne,
- comportant un réservoir de carburant servant au stockage permanent de carburant, et
- comportant un capteur de pression servant à mesurer les valeurs de la pression dans le réservoir de carburant,
caractérisé
- en ce qu'à des instants successifs (n, n-1), on relève les valeurs de la pression dans le réservoir (TDₙ),
- en ce qu'à partir de valeurs successives de la pression dans le réservoir (TDₙ, TDₙ₋₁), on détermine la variation de la pression dans le réservoir (DTD),
- en ce que la variation de la pression dans le réservoir (DTD) est comparée à une valeur limite (GW), et
- en ce qu'en cas de dépassement de cette valeur limite (GW), on reconnaît l'existence d'une voie de circulation en mauvais état.

2. Procédé suivant la revendication 1, caractérisé en ce que la variation de la pression dans le réservoir (DTD), avant comparaison avec la valeur limite (GW), est l'objet d'un calcul de moyenne (MDTD) avec une constante de moyenne qui peut être choisie.

3. Procédé suivant la revendication 1, caractérisé en ce qu'on forme les montants de la variation de la pression dans le réservoir (DTD), puis on effectue leur somme sur un intervalle de temps donné, et alors seulement on compare cette somme à une valeur limite prédéfinie.

4. Procédé suivant la revendication 1, caractérisé en ce que la valeur limite (GW) est tirée d'un champ de caractéristiques en fonction des grandeurs actuelles de fonctionnement du véhicule, en particulier de la vitesse du véhicule et du niveau de remplissage du réservoir de carburant

5. Procédé suivant la revendication 1, caractérisé en ce que le coefficient d'interprétation servant à évaluer la pression dans le réservoir, (DTD), est tiré d'un champ de caractéristiques en fonction des grandeurs actuelles de fonctionnement du véhicule automobile, en particulier de la vitesse du véhicule et du niveau de remplissage actuel du réservoir de carburant.

6. Procédé suivant la revendication 2, caractérisé en ce que la constante utilisée pour le calcul de la moyenne est tirée d'un champ de caractéristiques en fonction des grandeurs actuelles de fonctionnement du véhicule automobile, en particulier de la vitesse du véhicule et du niveau de remplissage du réservoir de carburant.

7. Procédé suivant la revendication 1, caractérisé en ce qu'un procédé de reconnaissance de ratés de combustion du moteur à combustion interne est masqué si une voie de circulation en mauvais état est reconnue.

8. Procédé suivant la revendication 7, caractérisé en ce que le masquage a lieu pendant une durée prédéfinie.

9. Procédé suivant la revendication 7, caractérisé en ce que le masquage a lieu aussi longtemps que la valeur de différence (DTD) est supérieure à la valeur limite (GW).

10. Procédé suivant la revendication 7, caractérisé en ce que le masquage du procédé de reconnaissance de ratés de combustion n'est réalisé que si, en supplément, d'autres procédés exécutés en parallèle et permettant de reconnaître des sections de voies de circulation en mauvais état, conduisent à conclure à une section de voie en mauvais état avec une fiabilité prédéterminée.
